Europäisches Patentamt

(19) European Patent Office

Office européen des brevets

(11) Numéro de publication: **0 119 110**
**B1**

(12) **FASCICULE DE BREVET EUROPÉEN**

(45) Date de publication du fascicule du brevet:
20.05.87

(51) Int. Cl.⁴: **G 05 D 3/14**

(21) Numéro de dépôt: **84400138.8**

(22) Date de dépôt: **20.01.84**

(54) Détecteur de position à capteur potentiométrique notamment pour sélecteur multidirectionnel.

(30) Priorité: **14.02.83 FR 8302320**

(43) Date de publication de la demande:
**19.09.84 Bulletin 84/38**

(45) Mention de la délivrance du brevet:
**20.05.87 Bulletin 87/21**

(84) Etats contractants désignés:
**DE GB IT**

(56) Documents cité:
**DE-A-1 588 777**
**FR-A-2 355 397**

(73) Titulaire: **AUTOMOBILES CITROEN, 62 Boulevard Victor- Hugo, F-92200 Neuilly- sur- Seine (FR)**
Titulaire: **AUTOMOBILES PEUGEOT, 75, avenue de la Grande Armée, F-75116 Paris (FR)**

(72) Inventeur: **Ducrot, Pol Baptiste, 49 Rue de Villeneuve, F-92380 Garches (FR)**

(74) Mandataire: **Moncheny, Michel, c/o Cabinet Lavoix 2 Place d'Estienne d'Orves, F-75441 Paris Cedex 09 (FR)**

## Description

La présente invention est relative aux détecteurs de position destinés notamment à repérer la position d'un sélecteur multidirectionnel admettant plusieurs positions discrètes préférentielles ou points d'arrêt, réparties de préférence de façon circonférentielle et à transmettre l'indication de position à distance.

Les détecteurs généralement utilisés pour cet usage se composent d'un capteur potentiométrique à piste annulaire, alimenté par une tension régulée et dont le curseur est monté solidaire du sélecteur.

La tension mesurée entre le curseur et le zéro de potentiel est caractéristique de la position du curseur et du sélecteur.

On connait d'après DE-A-1 588 777 un détecteur de position comportant un potentiomètre réglable un potentiomètre à régler constitué de plusieurs résistances discrètes connectées en série, les points de jonction entre les résistances étant reliés à des conducteurs isolés les uns des autres qui aboutissent à une piste d'un curseur. Les curseurs du potentiomètre de réglage et du potentiomètre à régler sont reliés à un amplificateur différentiel, le curseur du potentiomètre à régler étant déplaçable sur sa piste de manière qu'il soit alternativement en contact avec un conducteur de liaison d'une jonction entre deux résistances puis avec deux de ces conducteurs. Il s'agit donc d'un dispositif admettant un nombre fini de positions discrètes.

Dans le cas où le selecteur n'admet qu'un nombre fini de positions discrètes, il est quelquefois gênant que l'indication donnée par le capteur varie continuellement quand la position du sélecteur varie autour de l'un de ses points d'arrêts.

L'invention vise à remedier à cet inconvénient en créant un détecteur de position qui soit réalisé de manière que les indications de position varient selon des pas successifs correspondant à autant de points d'arrêt du sélecteur auquel il est associé.

Elle a donc pour objet détecteur de positon pour sélecteur multidirectionnel comportant une série de positions discrètes préférentielles ou points d'arrêt et propre à transmettre à distance une indication correspondant à la position sélectionné et à asservir le sélecteur sur cette position, un capteur potentiométrique dont le curseur est solidaire du selecteur et dont les bornes fixes sont alimentées par une tension régulée, ledit capteur potentiométrique admettant une loi de réponse de la tension du curseur en fonction du déplacement du curseur qui se compose de paliers de tension reliés entre eux par des zones proportionnelles, les points d'arrêt du curseur du potentiomètre se trouvant au milieu des zones proportionnelles un récepteur comprenant une source de tensions de référence, dont certaines matérialisent les points d'arrêt du sélecteur, la source de tension de référence comprenant und première série de tensions égales aux tensions données par le capteur quand le sélecteur se trouve sur les points d'arrêt correspondants et une seconde série de tensions égales aux tensions que donne le capteur potentiométrique quand son curseur se trouve sur les paliers de tension, un amplificateur différentiel destiné à établir l'écart entre le point d'arrêt et la position instantanée du curseur du potentiomètre et un actionneur commandé par les signaux de sortie dudit amplificateur différentiel et destiné à agir sur le sélecteur pour le ramener sur ledit point d'arrêt, caractérisé en ce qu'il comporte en outre des moyens comparateurs de la tension sur le curseur du potentiomètre avec les tensions de référence de ladite source des moyens pour indiquer le point d'arrêt le plus proche de la position du curseur du potentiomètre et par conséquent du sélecteur.

L'invention sera mieux comprise à l'aide de la description qui va suivre, donnée uniquement à titre d'exemple et faite en se référant aux dessins annexés, sur lesquels:

- la Fig.1 est un schéma électrique détaillé du récepteur du détecteur de position suivant l'invention;
- la Fig.2 est un schéma électrique détaille du récepteur du détecteur de position suivant l'invention;
- la Fig.3 est une courbe représentant la loi de réponse du potentiomètre qui constitue le capteur du détecteur suivant l'invention;
- les Fig.4, 5 et 6 sont des vues schematiques partielles d'exemples de réalisation de potentiomètres dont la courbe de réponse correspond à celle de la Fig 3.

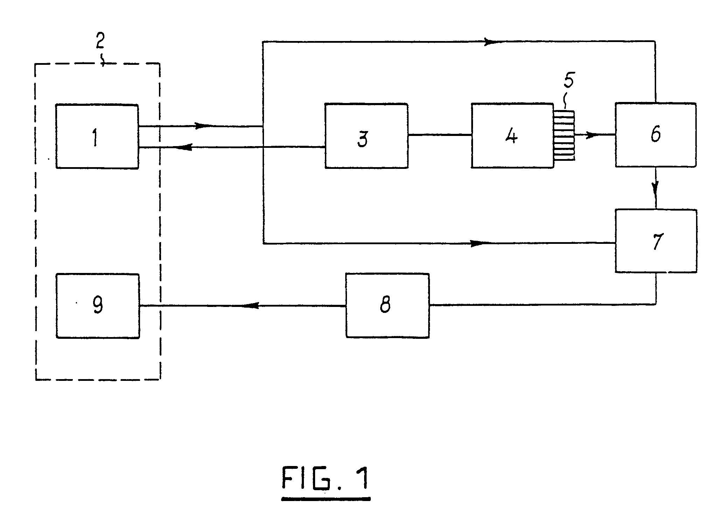

Le détecteur représente à la Fig.1 comporte un capteur potentiométrique 1 dont la construction sera précisée par la suite.

Le curseur du capteur 1 est solidaire d'un sélecteur 2 représenté par un rectangle en trait interrompu et dont le détecteur doit déterminer la position.

Le capteur 1 est relié à une alimentation régulée 3 qui alimente en outre une source 4 de tensions de référence comportant plusieurs sorties 5.

Sur les sorties 5 de la source 4 apparaissent des tensions qui constituent autant de valeurs de référence donnant les points d'arrêt du curseur du capteur potentiométrique 1.

Le circuit de la Fig.1 comporte en outre un comparateur 6 dont une entrée est connectée aux sorties 5 de la source 4 de tensions de référence et dont une autre entrée est connectée à la sortie du capteur 1. La sortie du comparateur 6 est connectée à une entrée d'un amplificateur différentiel 7 dont une autre entrée est connectée à la sortie du capteur 1.

La sortie de l'amplificateur différentiel 7 est connectée à l'entrée d'un circuit de commande 8 dont la sortie est reliée à un actionneur 9 couplé mécaniquement au capteur 1.

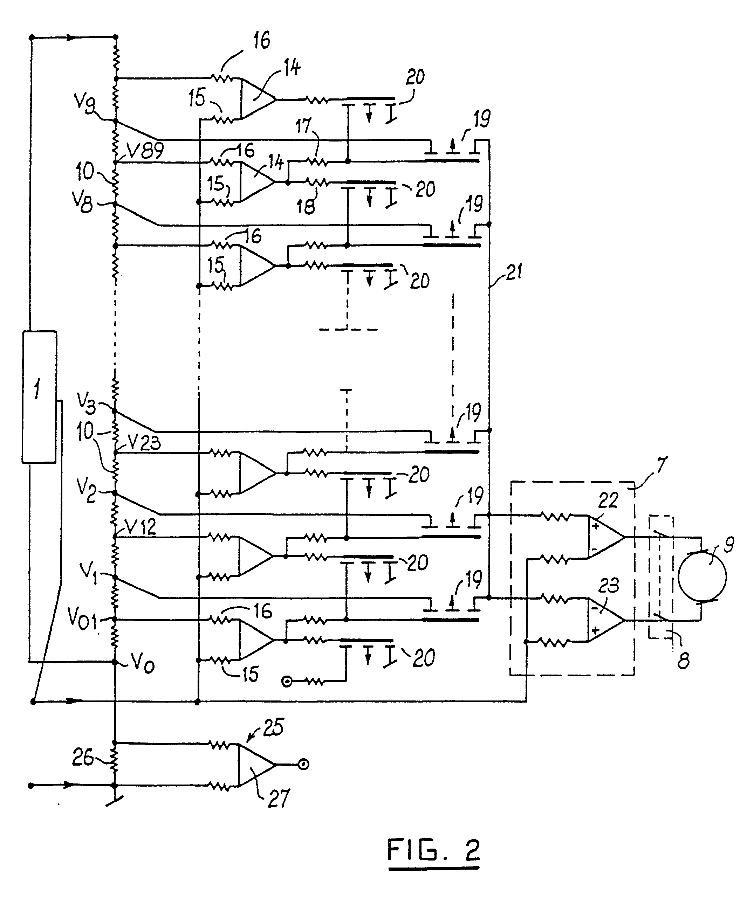

Sur la Fig.2, on a représenté de façon plus détaillée, un exemple de réalisation du récepteur du détecteur suivant l'invention.

Le capteur potentiométrique 1 est connecté par ses bornes fixes à le source 4 de tensions de référence.

La source 4 comporte pour n positions du sélecteur, $2n+2$ résistances calibrées 10 montées en série.

L'ensemble est alimentée par une tension régulée $V_o$.

On dispose donc d'un premier ensemble de n sorties $V_1$, $V_2$, ... $V_n$ et d'un deuxième ensemble de $n+1$ sorties $V_{01}$, $V_{12}$, ... $V_{nn+1}$ alternés avec les précédentes.

Dans le présent exemple $n=9$.

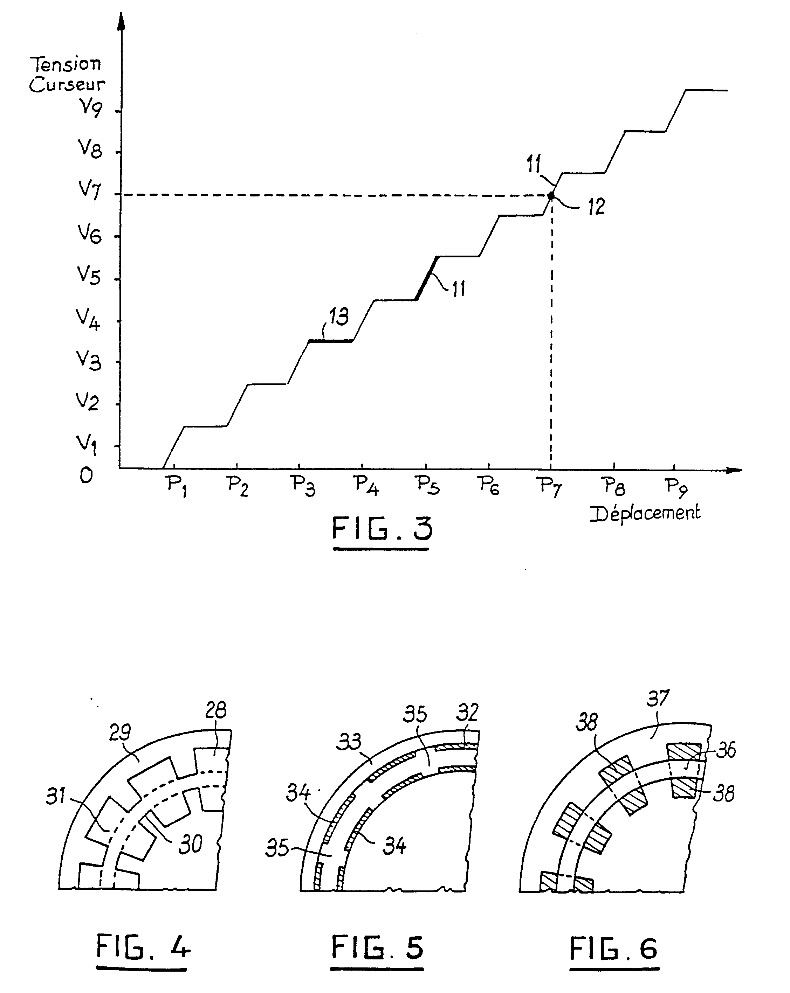

La loi de réponse du capteur 1 est indiquée à la Fig.3 sur laquelle on voit que les déplacements angulaires sont portés en abscisses, les points d'arrêt du sélecteur étant indiqués par les positions $P_1$ à $P_9$, tandis que les tensions sont portées en ordonnées, les tensions correspondant aux points d'arrêt étant indiquées en $V_1$ à $V_9$.

La courbe de la Fig.3 comporte des segments 11 à forte pente ayant chacun pour milieu un point d'arrêt 12 du sélecteur 2. Les segments 11 sont reliés par des paliers de tension 13.

Les tensions $V_1$, $V_2$, ... $V_n$ aont égales aux tensions que prend le capteur quand le sélecteur est sur un point d'arrêt.

Les tensions $V_{01}$, $V_{12}$, ... $V_{nn+1}$ aont égales aux tensions que prend le capteur quand le curseur est sur un palier de tension.

Un ensemble de $n+1$ comparateurs 14 est relié par l'intermédiaire de résistances 15 au curseur du potentiomètre 1 et par l'intermédiaire de résistances 16, aux différentes tensions $V_{01}$, $V_{12}$,. .. $V_{23}$, ... $V_{nn+1}$.

La tension du curseur est appliquée aux entrées positives tandis que les différentes tensions $V_{01}$, $V_{12}$, $V_{23}$,... sont appliquées aux entrées négatives 16 des comparateurs 14.

Les sorties des comparateurs 14 sont respectivement reliées par l'intermédiaire de résistances 17, 18 aux électrodes de grille d'une première et d'une seconde séries 19, 20 de transistors, de préférence de transistors à effet de champ métal-oxyde-semi-conducteur.

Les transistors 19 de la première série ont par ailleurs leurs trajets source-drain connectés chacun à une tension $V_1$ à $V_n$ et à un conducteur collecteur 21.

Les transistors 20 de la seconde série ont par ailleurs leurs trajets source-drain connectés chacun d'une part au point de jonction d'une résistance 17 et du transistor 19 de la première série suivant et d'autre part à la masse.

L'amplificateur différentiel 7 qui fait partie du circuit de la Fig.2 est en fait constitué de deux amplificateurs 22, 23.

L'entrée positive de l'amplificateur 22 et l'entrée négative de l'amplificateur 23 sont connectées au conducteur collecteur 21 tandis que l'entrée négative de l'amplificateur 22 et l'entrée positive de l'amplificateur 23 sont reliées au curseur du potentiomètre 1.

Les sorties des amplificateurs 22 et 23 sont connectées aux bornes de l'actionneur 9 qui dans le présent exemple est un moteur électrique.

Entre les sorties des amplificateurs 22 et 23 et le moteur 9 est interposé un moyen de commande 8 matérialisé par un double interrupteur servant à isoler l'actionneur 9 pour que le sélecteur puisse être placé initialement sur sa plage de fonctionnement.

L'ensemble est complété par un circuit de contrôle 25 permettant de vérifier que le potentiomètre 1 et la chaîne de référence sont bien alimentés.

Le circuit 25 comprend un shunt 26 connecté en série avec les résistances 10 de la chaîne de référence. Aux bornes du shunt 26 est connecté un amplificateur différentiel 27 dont la sortie délivre un signal indiquant l'état de la chaîne de résistances.

Afin d'obtenir une courbe de réponse du type représenté à la Fig.3, la piste du potentiomètre 1 peut être du type représenté aux Fig. 4, 5 ou 6.

Sur la Fig.4, on a représenté en vue partielle une piste 28 en une matière résistive disposée sur un disque 29 en matière isolante. La piste 28 présente des parties étroites 30 de résistance relativement élevée qui matérialisent les segments 11 de forte pente de la courbe de la Fig.3, ces parties étroites étant alternées avec des parties larges 31 de résistance pratiquement négligeable qui correspondent aux paliers 13 de ladite courbe. On obtient ainsi une piste de largeur modulée.

La piste 32 de la Fig.5 est constituée par un anneau en matière résistive disposé sur un disque 33 de matière isolante. L'anneau 32 est de largeur constante mais des zones métallisées 34 sont disposées à intervalles réguliers sur l'anneau 32 et créent ainsi sur la piste des zones de résistance pratiquement nulle qui correspondent aux paliers 13 de la courbe de la Fig.3, les zones de forte résistance étant matérialisées par les portions 35 de la piste 32 dépourvues de métallisation.

La piste représentée à la Fig.6 comporte elle aussi un anneau 36 de matière résistive disposé sur un disque isolant 37. Entre l'anneau 36 et le disque isolant 37 sont interposées à intervalles réguliers des bandes métallisées 38 qui court-circuitent les parties de l'anneau 36 au-dessous desquelles elles se trouvent. Les bandes métallisées 38 sont déposées sur le disque isolant 37 préalablement au dépôt de la piste résistive 36. Les bandes sousjacentes 38 sont disposées perpendiculairement à la piste 36 et constituent des zones matérialisant les paliers 13 de la courbe de la Fig.3. Leur épaisseur de quelques microns ne perturbe pas la planéité de la piste 36.

Ce dernier mode de réalisation est le mode de réalisation préféré pour la mise en oeuvre de l'invention.

L'agencement qui vient d'être décrit fonctionne de la façon suivante.

Le curseur du capteur potentiométrique 1 se trouvant dans une certaine position et étant alimenté par la source 3, émet une tension appliquée d'une part à une entrée du circuit comparateur 6 et d'autre part à une entrée de l'amplificateur différentiel 7.

En se référant à la Fig.2, on voit que la tension apparaissant sur le curseur du capteur 1 est appliquée par les résistances 15 aux entrées correspondantes des n + 1 comparateurs 14 ainsi qu'aux entrées négative et positive des amplificateurs 22 et 23 qui constituent l'amplificateur différentiel 7.

Les tensions $V_{01}$, $V_{12}$, $V_{23}$ ... $V_{89}$ élaborées par l'échelle de résistances 10 sont appliquées aux autres entrées des comparateurs 14 par l'intermédiaire des résistances 16.

A chaque instant tous les comparateurs 14 dont les tensions de référence délivrées par 1 échelle de résistances 10 sont inférieures à la tension du curseur du capteur 1 émettent un signal.

Quand un comparateur 14 relié à une tension $VPP + 1$ est activé, le transistor correspondant 19 de la première série est rendu conducteur et relie la tension $V_{p+1}$ au conducteur collecteur 21. Le transistor 20 de la deuxième série met au potentiel zéro la grille du transistor 19 précédent relié à la tension $V_p$.

Ainsi à chaque instant, la tension de référence la plus proche de celle délivrée par le curseur du potentiomètre est appliquée au conducteur 21. Cette tension détermine le point d'arrêt correspondant du sélecteur représenté par le milieu d'un segment de forte pente de la courbe de la Fig.3.

La tension appliquée au conducteur collecteur 21 est comparée à celle du curseur du capteur 1 dans l'amplificateur différentiel 7. A cet effet, la tension du conducteur 21 est appliquée à la borne positive de l'amplificateur 22 et à la borne négative de l'amplificateur 23 tandis que la tension du curseur est appliquée à la borne négative de l'amplificateur 22 et à la borne positive de l'amplificateur 23.

Les sorties des amplificateurs 22 et 23 agissent sur les bornes du moteur 9 qui actionne le sélecteur non représenté afin de l'asservir au point d'arrêt 12 établi par la position du curseur du potentiomètre 1.

Le moyen de commande 8 constitué sur la Fig.2 par des interrupteurs couplés, branchés entre les sorties des amplificateurs 22 et 23 et le moteur 9 sert lors de l'ouverture des interrupteurs à isoler le moteur 9 du reste du circuit afin de permettre de placer le sélecteur initialement sur une plage de fonctionnement désirée.

Puis les interrupteurs 8 sont a nouveau fermés et l'asservissement du sélecteur est à nouveau rétabli.

**Revendications**

1. Détecteur de positon pour sélecteur multidirectionnel comportant une série de positions discrètes préférentielles ou points d'arrêt et propre à transmettre à distance une indication correspondant à la position sélectionné et à asservir le sélecteur sur cette position un capteur potentiométrique (1) dont le curseur est solidaire du sélecteur et dont les bornes fixes sont alimentées par une tension régulée, ledit capteur potentiométrique (1) admettant une loi de réponse de la tension du curseur en fonction du déplacement du curseur qui se compose de paliers de tension (13) reliés entre eux par des zones proportionnelles (11), les points d'arrêt (12) du curseur du potentiomètre (1) se trouvant au milieu des zones proportionnelles (11), un récepteur comprenant une source (4) de tensions de référence dont certaines ($V_1$ ... $V_n$) matérialisent les points d'arrêt du sélecteur, la source (4) de tension de référence comprenant une première série de tensions ($V_1$, ... $V_n$) égales aux tensions données par le apteur quand le sélecteur se trouve sur les points d'arrêt correspondants et une seconde série de tensions ($V_{01}$, ... $V_{nn+1}$) égales aux tensions que donne le capteur potentiométrique (1) quand son curseur se trouve sur les paliers de tension (13), un amplificateur différentiel (7) destiné à établir l'écart entre le point d'arrêt (12) et la position instantanée du curseur du potentiomètre (1) et un actionneur (9) commandé par les signaux de sortie dudit amplificateur différentiel et destiné à agir sur le sélecteur pour le ramener sur ledit point d'arrêt, caractérisé en ce quil comporte en outre des moyens comparateurs (6) de la tension sur le curseur du potentiomètre avec les tensions de référence de ladite source (4), des moyens (19, 20) pour indiquer le point d'arrêt (12) le plus proche de la position du curseur du potentiomètre et par conséquent du sélecteur.

2. Détecteur de position suivant la revendication 1, caractérisé en ce que lesdits moyens de comparaison comprennent des comparateurs (14) de la tension du curseur du capteur potentiométrique (1) aux paliers de tension (13), l'une des entrées de chaque comparateur (14) étant reliée au curseur du capteur (1) et son autre entrée étant connectée à une tension de référence parmi les tensions ($V_{01}$, ... $V_{nn+1}$) correspondant aux paliers de tension (13).

3. Détecteur de position suivant la revendication 1, dont le récepteur comporte une sortie reliée à un indicateur, caractérisé en ce qu'il comporte des moyens (19, 20) de commande d'affichage par l'indicateur du point d'arrêt (12) du sélecteur quand le curseur du capteur potentiométrique (1) est dans une position quelconque de la zone proportionnelle (11) correspondante, lesdits moyens de commande sont constitués par une première série de transistors (19), montée de manière à relier les différentes tensions de référence de points d'arrêt ($V_1$, ... $V_n$) à la sortie du récepteur et une seconde série de transistors (20) agencés de manière à assurer le blocage des transistors (19) de la première serie qui correspondent à des plages de tension inferieures à la plage sélectionnée par la position du curseur du potentiomètre (1).

4. Détecteur de position suivant la revendication 3, caractérisé en ce que lesdits transistors (19, 20) sont des transistors à effet de champ métal-oxyde-semi-conducteur, les grilles desdits transistors étant connectées aux sorties des comparateurs (14) correspondants, les trajets source-drain des transistors (19) de la première série étant connectés entre des tensions respectives ($V_1$, ... $V_n$) de la première série de tensions de points d'arrêt du sélecteur et un conducteur collecteur commun (21) lui-même connecté à une entrée de l'amplificateur différentiel (7), tandis que les trajets source-drain des transistors (20) de la seconde série sont connectés entre les grilles respectives des transistors (19) de la première série et la masse.

5. Détecteur de position suivant l'une des revendications précédentes, caractérisé en ce que le capteur potentiométrique (1) comporte une piste (28; 32; 38) circulaire.

6. Détecteur de position suivant l'une des revendications 1 à 5, caracterisé en ce que la piste du capteur potentiométrique comporte des secteurs (31; 34; 38) de resistance pratiquement nulle correspondant aux paliers de tension (13) reliés à des secteurs (30; 35) de résistance non nulle correspondant aux zones proportionnelles (11).

7. Détecteur de position suivant la revendication 5, caractérisé en ce que la piste (28) du capteur potentiométrique est constituée par une alternance de zones (31) larges de résistance négligeable et de zones (30) étroites de forte résistance.

8. Détecteur de position suivant la revendication 5, caractérisé en ce que la piste (32) du capteur potentiométrique est constituée d'un anneau en matière résistive sur lequel sont disposées à intervalles réguliers des couches (34) de métallisation.

9. Détecteur de position suivant la revendication 5, caractérisé en ce que la piste (38) du capteur potentiométrique est constitue d'une couche annulaire de matière resistive formée par dépôt sur un support (37) sur lequel sont déposées au préalable à intervalles réguliers des bandes transversales de métallisation (38) qui court-circuitent les zones de la couche annulaire (36) qui leur sont superposées.

**Patentansprüche**

1. Stellungsdetektor für einen Mehrrichtungswähler, mit einer Folge von diskreten Vorzugsstellungen oder Haltepunkten und geeignet für eine Fernübertragung einer der ausgewählten Stellung entsprechenden Angabe und für eine Regelung des Wählers auf diese Stellung, einem potentiometrischen Geber (1), dessen Schiebekontakt mit dem Wähler fest verbunden ist und dessen feststehende Klemmen mit einer konstant gehaltenen Spannung versorgt werden, wobei der potentiometrische Geber (1) einen Ansprechverlauf der Spannung des Schiebekontakts in Abhängigkeit von der Versetzung des Schiebekontakts gestattet, welcher sich aus Spannungsschultern (13), die untereinander durch Proportionalzonen (11) verbunden sind, zusammensetzt, wobei sich die Haltepunkte (12) des Schiebekontakts des Potentiometers (1) inmitten der Proportionalzonen (11) befinden, einem Empfänger, welcher eine Quelle (4) von Bezugsspannungen enthält, von denen bestimmte ($V_1$, ... $V_n$) die Haltepunkte des Wählers markieren, wobei die Bezugsspannungsquelle (4) eine erste Folge von Spannungen ($V_1$, ... $V_n$), die gleich den vom Geber, wenn sich der Wähler auf den entsprechenden Haltepunkten befindet, gegebenen Spannungen sind, und eine zweite Folge von Spannungen ($V_{01}$, ... $V_{nn+1}$) die gleich den Spannungen sind, welche der potentiometrische Geber (1) gibt, wenn sich sein Schiebekontakt auf den Spannungsschultern (13) befindet, umfaßt, einem Differenzverstärker (7), welcher dazu bestimmt ist, die Abweichung zwischen dem Haltepunkt (12) und der momentanen Stellung des Schiebekontakts des Potentiometers (1) zu errichten, und einem Betätigungsglied (9), welches von den Ausgangssignalen des Differenzverstärkers gesteuert wird und dazu bestimmt ist, auf den Wähler einzuwirken, um ihn auf den Haltepunkt zurückzuführen, dadurch <u>gekennzeichnet</u>, daß er ferner Vergleichsmittel (6) zum Vergleichen der Spannung am Schiebekontakt des Potentiometers mit den Bezugsspannungen der Quelle (4), Mittel (19, 20) zur Angabe des Haltepunkts (12), welcher am nächsten zur Stellung des Schiebekontakts des Potentiometers und folglich des Wählers ist, aufweist.

2. Stellungsdetektor nach Anspruch 1, dadurch <u>gekennzeichnet</u>, daß die Vergleichsmittel Vergleicher (14) der Spannung des Schiebekontakts des potentiometrischen Gebers (1) mit den Spannungsschultern (13) umfassen, wobei der eine der Eingänge eines jeden Vergleichers (14) mit dem Schiebekontakt des Gebers (11) und sein anderer Eingang mit einer Referenzspannung aus den den Spannungsschultern (13) entsprechenden Spannungen ($V_{01}$, ... $V_{nn+1}$) verbunden ist.

3. Stellungsdetektor nach Anspruch 1, dessen Empfänger einen mit einer Anzeigevorrichtung verbundenen Ausgang aufweist, dadurch <u>gekennzeichnet</u>, daß er Steuermittel (19, 20) für die Anzeige des Haltepunkts (12) des Wählers, wenn sich der Schiebekontakt des potentiometrischen Gebers (1) in irgendeiner Stellung der entsprechenden Proportionalzone (11) befindet, durch die Anzeigevorrichtung umfaßt, wobei die Steuermittel durch eine erste Folge von Transistoren (19), die so verschaltet sind, daß die verschiedenen Bezugsspannungen der Haltepunkte ($V_1$, ... $V_n$) mit dem Ausgang des Empfängers verbunden sind, und eine zweite Folge von Transistoren (20),die so eingerichtet sind, daß sie ein Sperren von Transistoren (19) der ersten Folge bewirken, die Spannungsbereichen unterhalb des durch die Stellung des Schiebekontakts des Potentiometers (1) ausgewählten Bereichs liegen, gebildet sind.

4. Stellungsdetektor nach Anspruch 3, dadurch gekennzeichnet, daß die Transistoren (19, 20) Metall-Oxid-Halbleiter-Feldeffekttransistoren sind, wobei die Gates der Transistoren mit den Ausgängen der entsprechenden Vergleicher (14) verbunden sind, die Source-Drain-Strecken der Transistoren (19) der ersten Folge zwischen den betreffenden Spannungen ($V_1$, ... $V_n$) der ersten Folge von Spannungen der Haltepunkte des Wählers und einer gemeinsamen Kollektorleitung (21), die ihrerseits miteinem Eingang des Differenzverstärkers (7) verbunden ist, angeschlossen sind, während die Source-Drain-Strecken der Transistoren (20) der zweiten Folge zwischen den betreffenden Gates der Transistoren (19) der ersten Folge und Masse angeschlossen sind.

5. Stellungsdetektor nach einem der vorstehenden Ansprüche, dadurch gekennzeichnet, daß der potentiometrische Geber (1) eine kreisförmige Spur (28; 32; 36) umfaßt.

6. Stellungsdetektor nach einem der Ansprüche 1 bis 5, dadurch gekennzeichnet, daß die Spur des potentiometrischen Gebers den Spannungsschultern (13) entsprechende Sektoren (31; 34; 38) mit einem Widerstand von praktisch null umfaßt, die mit den Proportionalzonen (11) entsprechenden Sektoren (30; 35) mit von null verschiedenem Widerstand verbunden sind.

7. Stellungsdetektor nach Anspruch 5, dadurch gekennzeichnet, daß die Spur (28) des potentiometrischen Gebers durch eine Wechselfolge von breiten Zonen (31) vernachlässigbaren Widerstands und engen Zonen (30) hohen Widerstands gebildet ist.

8. Stellungsdetektor nach Anspruch 5, dadurch gekennzeichnet, daß die Spur (32) des potentiometrischen Gebers durch einen Ring aus Widerstandsmaterial, auf welchem in regelmäßigen Abständen Metallisierungsschichten (34) angeordnet sind, gebildet ist.

9. Stellungsdetektor nach Anspruch 5, dadurch gekennzeichnet, daß die Spur (36) des potentiometrischen Gebers durch eine ringförmige Schicht aus Widerstandsmaterial gebildet ist, welche durch Abscheidung auf einem Träger (37) ausgebildet ist, auf welchem vorher in regelmäßigen Abständen transversale Metallisierungsbänder (38) abgeschieden sind, welche die Zonen der ringförmigen Schicht (36), die ihnen überlagert sind, kurzschließen.

## Claims

1. A position detector for a multidirectional selector comprising a series of preferential discrete positions or stop points and capable of transmitting over a distance an indication corresponding to the selected position and causing the selector to adopt said position, a potentiometric sensor whose slider is connected to the selector and whose fixed terminals are supplied with a regulated voltage, said potentiometric sensor (1) providing a law of response of the voltage of the slider as a function of the displacement of the slider and which is composed of voltage steps (13) interconnected by proportional zones (11), the stop points (12) of the slider of the potentiometer (1) being located in the middle of the proportional zones (11), a receiver comprising a source (4) of reference voltages, some ($V_1$ ... $V_n$) of which materialize the stop points of the selector, the source (4) of reference voltages comprising a first series of voltages ($V_1$ ... $V_n$) equal to the voltages given by the sensor when the selector is on one of the corresponding stop points, and a second series of voltages ($V_{01}$ ... $V_{nn+1}$) equal to the voltages given by the potentiometric sensor (1) when its slider is on the voltage steps (13), a differential amplifier (7) adapted to establish a difference between the stop point (12) and the instantaneous position of the slider of the potentiometer (1) and an actuator (9) controlled by the output signals of said differential amplifier and adapted to act on the selector for returning it to said stop point, characterised in that it further comprises means (6) for comparing the voltage on the slider of the potentiometer with the reference voltages of said source (4), means (19, 20) for indicating the stop point (12) which is the closest to the position of the slider of the potentiometer and consequently of the selector.

2. A position detector according to claim 1, characterised in that said comparison means comprise comparators (14) of the voltage of the slider of the potentiometric sensor (1) with the voltage steps (14), one of the inputs of each comparator (14) being connected to the slider of the sensor (1) and its other input being connected to a reference voltage among the voltages ($V_{01}$ ... $V_{nn+1}$) corresponding to the voltage steps (13).

3. A position detector according to claim 1, whose receiver comprises an indicator, characterised in that it comprises means (19, 20) controlling display by the indicator of the stop point (12) of the selector when the slider of the potentiometric sensor (1) is in any positioin of the corresponding proportional zone (11), said control means being constituted by a first series of transistors (19) connected in such manner as to connect the various stop point reference voltages ($V_1$ ... $V_n$) to the output of the receiver and a second series of transistors (20) so arranged as to ensure the turning off of the transistors (19) of the first series which correspond to voltage ranges lower than the range selected by the

**0 119 110**

position of the slider of the potentiometer (1).

4. A position detector according to claim 3, characterised in that said transistors (19, 20) are metal-oxidesemi-conductor field-effect transistors, the grids of said transistors being connected to the outputs of the corresponding comparators (14), the source-drain paths of the transistors (19) of the first series being connected between respective voltages $(V_1, ... V_n)$ of the first series of stop point voltages of the selector and a common collector conductor (21) itself connected to an input of the differential amplifier (7), while the source-drain paths of the transistors (20) of the second series are connected between the respective grids of the transistors (19) of the first series and earth.

5. A position detector according to one of the preceding claims, characterised in that the potentiometric sensor (1) has a circular track (28: 32; 36).

6. A position detector according to one of the claims 1 to 5, characterised in that the track of the potentiometric sensor has sectors (31; 34; 38) of practically zero resistance corresponding to the voltage steps (13) connected to sectors (30: 35) of non-zero resistance corresponding to the proportional zones (11).

7. A position detector according to claim 5, characterised in that the track (28) of the potentiometric sensor is constituted by an alternation of wide zones (31) of negligible resistance and narrow zones (30) of high resistance.

8. A position detector according to claim 5, characterised in that the track (32) of the potentiometric sensor is constituted by a ring of resistive material on which are disposed at even intervals layers (34) of metallization.

9. A position detector according to claim 5, characterised in that the track (36) of the potentiometric sensor is constituted by an annular layer of resistive material formed by deposition on a support (37) on which are previously deposited at even intervals transverse bands of metallization (38) which short the zones of the annular layer (36) superimposed thereupon.

FIG. 1

FIG. 2

**FIG. 3**

**FIG. 4**   **FIG. 5**   **FIG. 6**